# EUROPEAN PATENT SPECIFICATION

(11) **EP 0 665 051 B1**
(45) Date of publication and mention of the grant of the patent: **17.12.1997**
(21) Application number: 95100350.8
(22) Date of filing: 12.01.1995
(51) Int. Cl.: B01F 5/04

(54) **Mixing of fluid substances**
Mischen flüssiger Substanzen
Mélange de substances fluides

(30) Priority: 28.01.1994 US 188437
(43) Date of publication of application: 02.08.1995
(73) Proprietor: SOCIETE DES PRODUITS NESTLE S.A., 1800 Vevey (CH)
(72) Inventor: Boatman, Jack K., St. Joseph, MO 64506 (US); Farnsworth, John T., St. Joseph, MO 64506 (US); Johnson, Roger D., St. Joseph, MO 64506 (US); Young, Linda A., Roxbury, CT 06783 (US)

(56) References cited:
- EP-A- 0 134 168
- CH-A- 581 493
- DE-A- 1 704 754
- FR-A- 663 974
- FR-A- 935 418
- FR-A- 1 261 312
- FR-A- 1 304 737
- US-A- 3 064 680
- US-A- 3 575 352
- US-A- 3 936 382
- US-A- 4 027 858
- US-A- 4 382 684

## Description

This invention relates to a process for mixing fluid substances. The process is particularly useful for homogeneously mixing fluid substances which have differing viscosities, for example an extruded food product and an additive for the food product. The invention also relates to apparatus for use in the process.

It is often difficult to obtain a substantially homogeneous mixture of substances having differing viscosities. This is particularly the case when the lower viscosity substance is added in relatively small amounts. In some cases, the problem may be dealt with by subjecting the substances to intensive mixing to obtain a homogeneous mixture. However this is not always permissible or desirable. For example, when the higher viscosity substance is sensitive to the effects of mechanical shear, intensive mixing is best avoided. Static mixers have been suggested as a means for mixing the substances while avoiding significant mechanical shear but it is found that the lower viscosity substance "tunnels" through the static mixer or migrates to the periphery of the static mixer. Therefore the mixing obtained is usually not homogenous.

One attempt to deal with the problem is disclosed in U.S. Patent 4753535. Here an apparatus having an outer conduit and an inner conduit is disclosed. The flow of the high viscosity substance is split between the conduits. The inner conduit has a downstream portion which contains static mixer and an inlet port for introducing a lower viscosity substance. The objective is to cause preliminary mixing of the additive and a portion of the high viscosity substance in the inner conduit. The flows in the two conduits are then combined and directed to a further static mixer where they are mixed together. The apparatus is said to prevent tunnelling of the low viscosity substance through the mixer.

Another solution is proposed in US patent 4616937. This patent discloses an encased "quill" which extends radially into a tubular conduit. The quill is positioned upstream of static mixers in the tubular conduit and has a discharge port for introducing a low viscosity substance centrally within the tubular conduit. In this way, the low viscosity substance is introduced into the higher viscosity substance flowing through the tubular conduit.

However, neither solution disclosed in these patents has proved to be entirely adequate. Obtaining a substantially homogeneous mixture of substances having differing viscosities without intensive mixing, and without significant in-line pressure loss over the static mixers, is still problematical.

It is therefore an object of this invention to provide a process for mixing substances of differing viscosities which enables, if desired, a homogeneous mixture to be obtained.

Accordingly, in one aspect this invention provides a process for mixing fluid substances according to claim 1.

Surprisingly, by introducing the additive into the gaps between the streams of the major fluid substance, tunnelling of the additive during the subsequent mixing step is avoided to a large extent. Hence high intensity mixing is not required; for example the combined flow may be mixed in a static mixer which does not impart significant shear forces on the fluid substances. This is of particular advantage in the processing of shear-sensitive substances such as extrusion-cooked food compositions.

Without wishing to be bound by theory, it is believed that the additive introduced between the fluid substance streams eddies and percolates into the voids between the fluid substance streams to disperse between the closely packed fluid substance streams. Hence the resistance of the additive to combine with the major fluid substance and the tendency of the additive to separate from the major fluid substance, is counteracted.

Preferably, the combined flow is compressed prior to mixing by causing it to flow through an area of reduced cross-section. This compression step assists in confining the additive, particularly if the fluid substance streams would have otherwise tended to lose their identity. Consequently, an advantage of the compression step is that the intensity of mixing required to achieve a substantially homogeneous mixture may be less than if the compression step was dispensed with.

Preferably, after compression, the combined flow is allowed to expand and then the expanded flow is subjected to mixing. The expansion is advantageous not only for generally enhancing additive distribution but also to moderate pressure drops created by the compression.

Preferably, the combined flow is mixed by passing it through static mixers. In this way, mechanical shear and pressure drop may be minimized.

The mixing process may be performed using a major fluid substance and an additive having a viscosity ratio of major fluid substance to additive of up to about 750000:1 and, in particular, of from about 100000:1 to about 500000:1. However, as the difference between the viscosities lessens, the tendency of the additive to migrate will lessen and the need for the process may lessen. However the process will still operate satisfactorily.

The major fluid substance may be any of various foodstuff compounds and compositions which are a fluid, other than a gas, or which may be fluidized. Therefore the major fluid substance may be one of a variety of plasticizable substances, including extrudate material. The viscosity of the major fluid substance is 100000 cP to 750000 cP, for example 200000 cP to 500000 cP.

Examples of preferred fluid substances which may be processed include food compositions which tend to set upon being processed with heat and pressure, such as by extrusion-cooking, and which are affected adversely by mechanical shear. These food compositions include amylaceous/farinaceous products, fibre products, and starch- and protein-based products. Examples of these products include breakfast cereals, cereal- and/or vegetable- and/or fruit-based snack foods, texturized vegetable protein products, pastas, cereal- and/or protein based pet foods, ice creams, and the like, whether or not produced by extrusion.

The major fluid substance may have a moisture content which contributes to the product being sensitive to mechanical shear. For example, extrusion-cooked food substances which have a moisture content of from about 5% to about 50% by weight, will exhibit this characteristic. Preferably however, any extrusion-cooked food substances which are processed have a moisture content of less than about 35% by weight, for example about 15% to 30% by weight. These substances readily set after being extruded.

Any of a variety of compounds and compositions may be used as the additive, the criterion being that additive be in a fluid form. The additive may be a liquid, a gas, a dispersion, a suspension, and the like. The viscosity of the additive may range from less than 1 cP to 1000 cP. In food applications, typical additives include colourants, agents for adjusting texture and/or density of the food product, flavourants, aromatizing agents, lipids and glycerides including fats and oils and fatty acids, fat substitutes, gums including guar and xanthan gums, food-acceptable gases, Maillard reaction products, and the like.

A further advantage of the process is that the lipid content of extruded products may be manipulated and increased. Usually, if the fluid substance is an extruded amylaceous, farinaceous, or proteinaceous product, the content of added lipid may not be more than about 5% to 6% by weight of the product (up to about 12 to 14% total fat content). Lipids acts as extrusion lubricants and hence, at higher levels, tend to affect the extrusion process adversely. Moreover, incorporation of further lipid into an already extruded product is problematic. However the process permits the addition of lipids as additives into extruded fluid substances in an amount in excess of from about 5% to 6%, such as to give a total lipid content of about 20% to about 40% by weight.

The process may further comprise partitioning a flow of the major fluid substance into a plurality of partitioned flows, at least one of the partitioned flows being segmented as defined above. Preferably all of the partitioned flows are segmented as defined above. This provides the advantage that the major fluid substance may be separated and processed into a plurality of different products. The products may differ in the additive added, the level of mixing, the shape of the product, and the like. For example, the process may further comprise passing the combined flow obtained from each partitioned stream through a die. If different shapes are desired, different dies may be used.

Another advantage of the process is that, in the processing of cooked and extruded foods, the additives are added after cooking and extrusion. Hence additives which may be sensitive to heating and otherwise could not be used, may be used.

In another aspect, this invention provides an apparatus for mixing fluids according to claim 7.

The mixing assembly comprises a compression means between the mixer and the segmenting means to compress the combined flow. The mixing assembly may also include an expansion means to permit the compressed combined flow to expand. The compression means and the expansion means may be combined to form a venturi between them or may be directly combined.

The segmenting means comprises a plate having two opposing faces and having a plurality of passages through it, the openings of the passages having area making up from 20% to 50% of the total area of the face which comes in contact with the fluid substance and additive. Preferably, each opening has an area of up to 5% of total area of the face which comes in contact with the fluid substance and additive; more preferably 3%.

Preferably the inlet means comprises a radial bore formed within the plate and extending from the outer edge of the plate and terminating in an opening which is substantially centrally disposed with respect to the face of the plate. Alternatively, the inlet means may comprise a pipe extending from the outer edge of the plate and terminating in an opening which is substantially centrally disposed with respect to the face of the plate.

The apparatus may comprise a plurality of mixing assemblies each connected to a common distribution means for distributing the first fluid substance equally between the mixing assemblies.

Preferably the distribution means comprises a plate having a protrusion projecting from one face and terminating in an apex, and a plurality of passages through the plate around the protrusion, the mixing assemblies being each connected to a passage on the opposite face of the plate; the protrusion directing flow of the major fluid substance evenly to each passage.

The protrusion may include a bore through it which opens out at the apex and which is connectable at its other end to a source of cleaning fluid, the bore having a valve in it adjacent the apex which prevents flow of the major fluid substance through the bore but permits egress of cleaning fluid from the bore.

Alternatively, the distribution means comprises a plate having an aperture extending from one face partially through it, and a plurality of diverging passages extending from the end of the aperture to the opposite face of the plate, the mixing assemblies being each connected to a passage on the opposite face of the plate. The plate may have a plurality of valve bores extending transversely into it from a periphery, one valve bore for each diverging passage and each valve bore intersecting with a diverging passage, and a valve member in each valve bore for selectively closing the diverging passage.

The apparatus may further comprise a die plate connected to the mixing assembly for the production of shaped products. If the apparatus has a plurality of mixing assemblies, a die plate may be connected to each mixing assembly. The die plates may have dies which differ from one another as desired. Preferably all the die plates are carried in a single retainer plate. A cutter may be connected after each die plate. The die plates may be in the form of removable inserts in the retainer plate that may be exchanged as desired.

Instead of a cutter after each die plate, a single cutter may be used to cut product leaving each die plate.

The apparatus therefore enables the simultaneous production of different products from a single flow of a major fluid substance. This is a major advantage of the apparatus.

Embodiments of the invention are now described, by way of example only, with reference to the drawings in which:
Figure 1 is a partially exploded, perspective view of the die assembly;
Figure 2 is a cross-section of the die assembly;
Figure 3 is a front view of a segmenting plate;
Figure 4 is a perspective view of extruded material and additive leaving the segmenting plate;
Figure 5 is a cross-section of a partitioning valve; and
Figure 6 is a cross-section of a one-way valve.

Referring to the figures, the die assembly, generally designated as 10, is positioned downstream of an extruder barrel 12. The extruder used upstream of the die assembly 10 is not critical and any suitable extruder may be used. Clearly, the extruder must be such to generate sufficient pressure to cause flow of extrudate through the die assembly 10. Examples of suitable extruders include single and twin screw extruders obtainable from manufacturers including Werner & Pfleiderer, Wenger, Sano, Leistritz, Er-We-Pa, Clextral and Buhler. For amylaceous/farinaceous and proteinaceous products, twin screw extruders are preferred. Preferably, the die assembly 10 is detachable from the extruder barrel 12 and is supported on a suitable frame (not shown).

The die assembly 10 has a flow converger 14 positioned immediately downstream of the extruder barrel 12. The flow converger 14 is in the form of a circular plate having a circular bore 16 through it. The barrel end 202 of the bore 16 is sized to snugly receive the extruder barrel 12 in it. The barrel end 202 of the bore 16 terminates in an inwardly tapering shoulder 204. The shoulder 204 in turn terminates in a central portion 206 of the bore 16; the central portion 206 being in the form of a venturi of substantially constant diameter. The downstream end of the bore 16 tapers outwardly from the central portion 206, and terminates at a diameter less than the outer diameter of the flow converger 14. Alternatively, if desired, the outwardly tapering portion may terminate in a downstream portion of the bore 16 which is of constant diameter, or the outwardly tapering portion may be entirely replaced by a portion of constant diameter. The flow converger 14 provides the advantage of reducing the effects of screw rotation on the extruded material by damping lateral flow vectors. Hence flow which is more uniform and linear is obtained. However, the flow converger 14 may be omitted from the die assembly 10 if desired.

A distribution unit 18 is positioned at the downstream face of the flow converger 14. The distribution unit 18 comprises a circular distribution plate 20, from the upstream face 22 of which a substantially cone-shaped protrusion 24 projects. The distribution plate 20 has four passages 28 through it, each passage 28 being equally spaced about the protrusion 24 and extending from a position adjacent the base of the protrusion 24. Four passages 28 are shown merely for the purposes of illustration; any suitable number (for example 6 or 8) may be provided.

A cleaning passage 26 runs through the distribution plate 20 from the tip of the protrusion 24 along the axis of the distribution plate 20. A channel 210 extends radially along the downstream face of the distribution plate 20; from the cleaning passage 26 to the outer circumferential edge of the distribution plate 20. A fluid supply line 48 is connected to the channel 210 at the outer circumferential edge of the distribution plate 20. A supply of cleaning fluid, for example water, is connected to the fluid supply line 48. A one-way valve 46 is fixed in the cleaning passage 26 to permit the flow of cleaning fluid from the fluid supply, through the channel 210, through the cleaning passage 26 and out of the protrusion 24. However, the valve 46 prevents any fluid flow in the reverse direction.

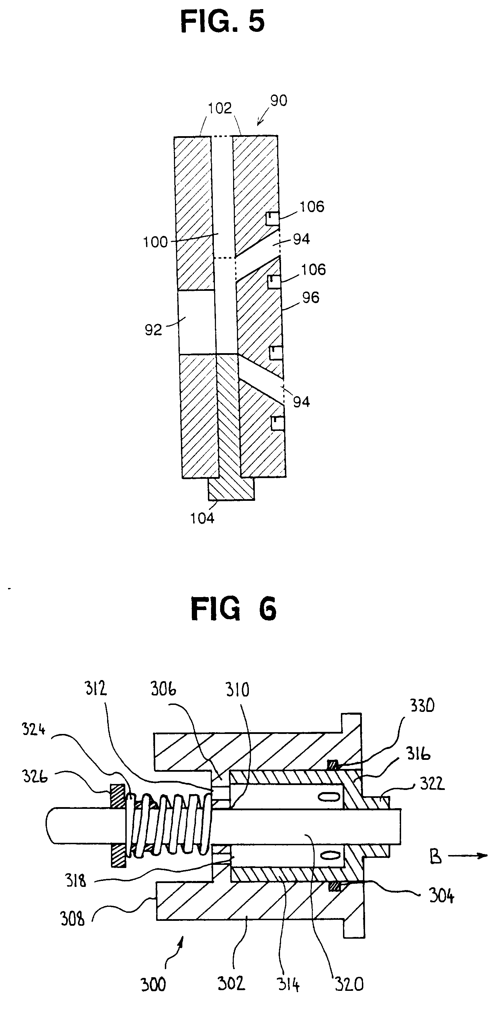

The valve 46 may be any suitable one way valve. For example, the valve described in US patent 1462519 may be adapted to fit in the cleaning passage 26. Another example is the valve 300 illustrated in figure 6. The valve 300 has a tubular housing 302 which is open at a downstream end 304. A wall 306 extends across the tubular housing 302, perpendicular to the axis of the tubular housing 302, near the upstream end 308 of the tubular housing 302. The wall 306 has a central bore 310 and a plurality of outer bores 310 through it; the outer bores 312 being spaced about the central bore 310. A tubular piston head 314 fits snugly and slidably within the tubular housing 302. The downstream end 316 of the piston head 314 is closed while the upstream end 318 is open. A piston rod 320 is connected to the downstream end 316 of the piston head 314 at a connector 322, and projects upstream along the axis of the piston head 314. The piston rod 320 extends through the central bore 310, and projects well beyond the upstream end 308 of the tubular housing 302. A spring 324 is fitted about the piston rod 320 and is held in place between the distal end of the piston rod 320 and the wall 306 by a nut 326. A plurality of passages 328 are provided through the circumferential wall of the piston head 314 adjacent its downstream end 316. An annular seal 330 is fixed in a circumferential groove in the tubular housing 302 near the downstream end 304 of the tubular housing. The annular seal 330 seals in a fluid tight manner between the piston head 314 and the tubular housing 302.

In use, the spring 324 pulls the piston head 314 tightly into the tubular housing 302. Fluid is prevented from flowing passed the valve 46 in either direction by the annular seal 330 and the seating of the piston head 314 on the wall 306 across the tubular housing 302. However, if cleaning fluid is caused to flow through the outer bores 312 and into the piston head 314 with a pressure providing a force greater than that of the spring 324, the piston head 314 is moved in the direction of arrow B. Eventually, the passages 328 in the piston head 314 clear the seal 330 and release the cleaning fluid. Hence fluid flow in only one direction is ensured.

A circular backing plate 220 is connected to the distribution plate 20 by bolts 50 positioned adjacent the circumferential edges of the backing and distribution plates 20 and 220. Plainly other suitable connecting means may be used. The backing plate 220 also has four passages 228 extending through it; these passages 228 aligning with the passages 28 through the distribution plate 20 when the distribution plate 28 is connected to the backing plate 220. Each passage 228 is reamed at the downstream face of the backing plate 220. The upstream face of the backing plate 220 has a recess 230 in its centre which aligns with the cleaning passage 26 of the distribution plate 20. A radial channel 232 extends from the recess 230 to the outer circumferential edge of the backing plate 220. This channel 232 aligns with the channel 210 in the distribution plate 20 to provide a fluid passage for cleaning fluid as described above. Plainly, these channels 210 and 232 may be replaced by a passage bored either through the distribution plate 20 or through the backing plate 220. Also, if desired, the distribution plate 20 and the backing plate 220 may be replaced by a single plate formed and machined to provide the illustrated structure.

Either or both of the flow converger 14 and distribution unit 18 may be sleeved to fit slidably together or may simply abut one another. The flow converger 14 and distribution unit 18 may be connected by suitable means such as bolts or brackets and the like. Once the flow converger 14 and distribution unit 18 are connected, the protrusion 24 on the distributor plate 20 projects into and through the central portion 206 of the bore 16 of the flow converger 14; but does not seal against it. In this way, fluid leaving the extruder barrel 12 flows through an annular gap between the flow converger 14 and the protrusion 24 of the distributor plate 18. The inwardly tapered shoulder 204 of the flow converger 14 causes the fluid to flow towards the centre of the flow converger 14 where it is caused to diverge evenly by the protrusion 24. In this way, good distribution of the fluid is obtained.

A circular segmentation plate 40 is connected to the downstream face of the backing plate 220 over each passage 228. Suitable bolts 56, positioned adjacent the outer circumferential edge 58 of the segmentation plate 40, may be used to fix the segmentation plate 40 to the backing plate 220. Alternatively the segmentation plates 40 may be integral with the backing plate 220. Each segmentation plate 40 has raised central portion 234 on its upstream face which fits snugly into the reamed portion of a passage 228 in the backing plate 220. In this way, the backing plate 220 and the segmentation plates 40 may be correctly aligned.

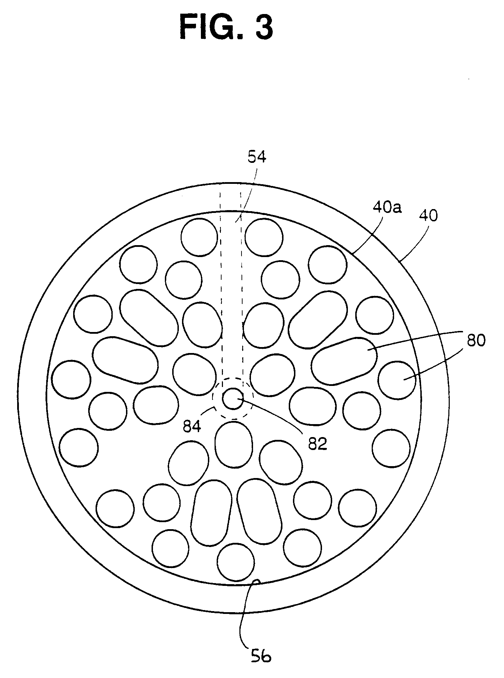

As best illustrated in figure 3, each segmentation plate 40 has a plurality of passages 80 through it; the passages 80 being aligned substantially parallel to the axis of the segmentation plate 40. The passages 80 may be spaced irregularly across the downstream face 40a of the segmentation plate 40 and may vary in shape. The downstream face 40a includes an outer annular shoulder portion 56a; the outermost passages 80 being spaced a distance radially inwardly of the shoulder portion 56a. The portion of the downstream face 40a radially inwardly of the shoulder portion is the portion which contacts the fluid substances and additives. An additive bore 54 extends radially from the axis of the segmentation plate 40 to the circumferential edge of the segmentation plate 40. A central passage 82 extends from the downstream face 40a of the segmentation plate 40 to the additive bore 54. An additive feed line 52 is connected to the additive bore 54 and to a suitable pump for addition of additive. The central passage 82 need not extend along the axis of the segmentation plate 40 but may slant outwardly to meet the additive bore 54.

Preferably, the passages 80 passing through the segmentation plate 40 do not intersect with either the additive bore 54 or the central passage 82. However, the segmentation plate 40 may have a centrally disposed passage 84, indicated with dotted lines, through it which intersects with the additive bore 54 and replaces the central passage 82. In this case, substance passing through the centrally disposed passage 84 pulls additive leaving the additive bore 54 with it. Alternatively, in place of the additive bore 54, a radially extending pipe could be secured to the downstream face 40a to have an exit positioned at a substantially centrally disposed portion of the downstream face 40a. If desired, the segmentation plate 40 may have more than one additive bore 54; the outlets to the additive bores 54 being spaced across the face 40a of the segmentation plate 40.

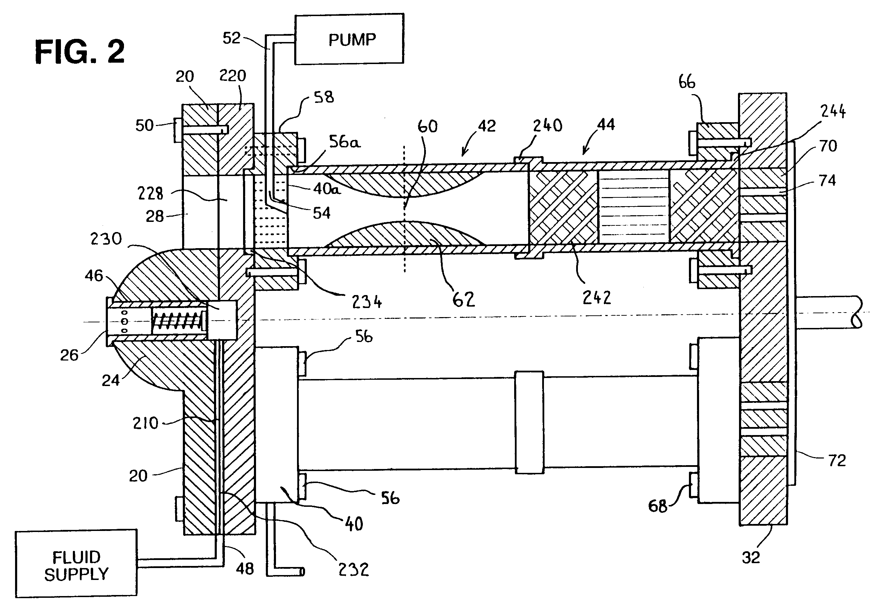

Turning back to figure 2, an upstream tube 42 is fixed to the downstream face 40a of each segmentation plate 40. The outer diameter of the each upstream tube 42 is such that the upstream tube 42 fits snugly within the annular shoulder portion 56a of the segmentation plate 40. In this way each upstream tube 42 may be aligned with a segmentation plate 40. If desired, the upstream tubes 42 may each have outwardly extending flanges to connect them to the segmentation plate 40. The inner diameter of each upstream tube 42 is large enough such that the outermost passages 80 through the segmentation plate 40 fall radially inwardly of the inner wall of the upstream tube 42.

Each upstream tube 42 includes an annular constriction 62 positioned in its bore downstream of the associated segmentation plate 40. The constriction 62 is illustrated to be semi-circular in cross-section in that it curves convexedly inwardly towards the axis of the upstream tube 42 and then curves convexedly outwardly back to the wall of the upstream tube 42. In this way, the constriction 62 provides for a gradual compaction followed by a gradual expansion of material flowing through it. Plainly, the constriction 62 need not be curved, it may also taper inwardly and outwardly. The constriction 62 may terminate sharply at its narrowest aperture 60 such that expansion of the material is rapid. Although constriction 62 is shown positioned approximately mid-way between the ends of the upstream tube 42, it may be positioned closer to one end or the other. In fact, the constriction 62 may begin immediately after the downstream face 40a of the segmentation plate 40.

The annular constriction 62 preferably has, at its narrowest aperture 60, a cross-sectional area of about 40% to about 80% of the cross-sectional area of the upstream tube 42. After the annular constriction 62, the cross-sectional area for flow preferably returns to that prior to the annular constriction 62. However, expansion to a cross-sectional area which is at least as large as that prior to the annular constriction 62 may be permitted; for example, up to about twice as large or more. Also, the cross-section area for flow after the constriction 62 may be less than that before the constriction 62.

A downstream tube 44 is fixed to the downstream end of each upstream tube 42. The downstream tube 44 has a sleeve portion 240 at its upstream end into which the upstream tube 42 fits snugly to align and connect the tubes 42 and 44. Suitable static mixers 242 are arranged in the downstream tube 44.

The downstream end of each downstream tube 44 has an outwardly directed flange 244 to permit securing of the downstream tube 44 to a retainer plate 32; the retainer plate 32 holding all of the tubes 42, 44 between it and the distribution unit 18. A locking ring 66 is placed around the flange 244 of each downstream tube 44. The locking ring 66 has a recess in it into which the flange 244 of the downstream tube 44 is received. In this way, the flange 244 of the downstream tube 44 may be sandwiched between the locking ring 66 and the retainer plate 32. Bolts 68 pass through the locking ring 66 into the retainer plate 32 to secure the locking ring 66, and hence the downstream tube 44, to the retainer plate 32.

Each upstream tube 42 may be joined to its associated downstream tube 44 by providing the tubes 42,44 with cooperating screw threads and threading them together, or by welding them together, and the like. Alternatively, a bracket (not shown) may be used to clamp together the retainer plate 32 and the distribution unit 18. In this case, the tubes 42,44 may be simply pressed together. Further, the system of having an upstream tube 42 interlocking with a downstream tube 44 may be replaced by a single tube fitted between the retainer plate 32 and each segmentation plate 40.

The retainer plate 32 has an aperture through it in line with each downstream tube 44 such that material flowing through the downstream tube 44 may flow through the retainer plate 32. A die plate 70 is fixed in each aperture. Each die plate 70 may have one or more die apertures 74 of a desired shape. A cutter 72 rotates on the retainer plate 32 to cut product leaving the die apertures 74. The cutter 72 may be replaced by a cutter for each die plate 70.

The static mixers 242 are selected to provide maximal open area for flow and minimal length to minimize pressure drop and shear, while achieving a desired degree of mixing. Since the viscosity of the major fluid substance is likely to be high, it is preferred that the static mixers 242 be suitable for mixing high viscosity fluids having laminar flows. Examples of static mixers 242 of this type have multi-layers to split and recombine the substance flowing through them. Static mixers of this type are commercially available, for example the Koch mixers described in Chemical Engineering Progress, June, 1991 pp. 32-38. Although static mixers are preferred, in-line dynamic mixers may also be used.

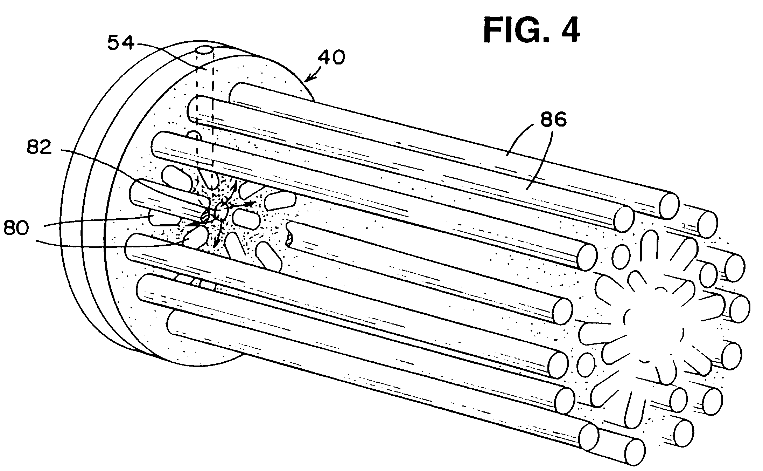

In use, the major fluid substance leaving the extruder barrel 12 enters the flow converger 14. Here, due to the tapering shoulder 204 and the cone-shaped protrusion 24, the substance is first compressed inwardly towards the axis of the flow converger 14 and then diverges evenly around the protrusion 24. The substance is then forced into the passages 28,228 through the distribution unit 18 and into the segmentation plates 40. The substance then flows through the passages 80 and through the segmentation plates 40. This causes the flow of substance passing through each segmentation plate 40 to form a matrix of separate flow streams 86. This is best illustrated in figure 4.

An additive is pumped through the additive bore 54 to enter at the centre of the matrix of separate flow streams 86. Here the additive tends to eddy and percolate between the flow streams 86 dispersing the additive. Further, it has been found that additive runs outwardly to some extent along the face 40a of the segmentation plate 40. This assists in distributing the additive throughout the flow streams 86. However, due to the packed nature of the flow streams 86 causing resistance to the outward flow of the additive, once dispersed, the additive is prevented from channelling to the sides of the tubes 42. Also, as the flow streams 86 move away from the segmentation plate 40, they tend to pull the additive axially with them, thus farther reducing the amount of additive migrating directly to the outer portions of the flow stream 86.

As the number of passages 80 through the segmentation plates 40 is increased, the packing of the flow streams 86 and the tendency to pull the additive axially, increases. Thus, to reduce the outward flow of the additive, the segmentation plates 40 should have as many passages 80 as possible. Preferably the outlet opening of each passage 80 makes up less than about 5% of total area of all outlet openings of the segmentation plate 40 combined; more preferably up to about 3% of the total area. Less than 1% is also acceptable. Further, the outlet openings of all passages 80 combined makes up about 20% to 50%, for example from about 40% to about 50%, of the total cross-sectional area of the plate face 40a which is in contact with the fluid substance and additive. As the size of each passage 80 and the total area of the passage openings is increased, the pressure drop across the segmentation plate 40 decreases. Therefore, the number of the passages 80 and their size should be optimized for any application; taking into account the structural integrity of the segmentation plate 40, the materials being mixed and acceptable pressure drops.

The size of the opening 82 of the additive bore 54 in the plate face 40a is such that sufficient additive may readily be introduced. Generally, an opening of cross-sectional area of about 1%, for example about 0.1% to about 1%, of the cross-sectional area of the plate face 40a in contact with the fluid substance and additive will be adequate. Larger areas, for example about 2% to about 3%, may also be acceptable.

The additives may be water-soluble and added in the form of aqueous solutions or may be dispersions and suspensions having a solids concentration of from, for example, about 1% to about 10%, by weight. More than one additive may be added at the same time. The additive addition may be controlled readily by monitoring the flow rates of the additive and major fluid substance. Further the additive may be heated prior to being added if the major fluid substance is heated to minimize thermal shock.

The segmentation plate 40 may be made of any suitable material which has sufficient strength for structural integrity. In this regard, the pressures against the segmentation plate 40 may be high; for example when extrusion-cooked food products are processed, pressures of up to 200 to 300 bar may be generated, and in the case of extruded plastics, pressures in excess of 1000 bar may be generated. In some applications the thickness of the segmentation plate 40 may be increased to provide for greater structural integrity. However, this is not always the case, particularly for products which are sensitive to mechanical shear. For these products, it is usually desired to employ a minimal plate thickness since passage of the product through the passages 80 of the segmentation plate 40 increases shear.

Generally, a segmentation plate 40 made of tempered steel, for example stainless steels, is sufficient for most applications. Steels coated with ceramics, zirconium, and the like, may also be used in applications were corrosion could be a problem. In general, for materials such as tempered stainless steel and for pressures of about 250 bar, a segmentation plate 40 thickness of about 6 mm to about 20 mm is sufficient when the total area of the passage openings of the plate 40 is about 40% to about 45% of the cross-sectional area of the downstream face 40a and when each opening forms about 1% to about 5% of the total area of all passage openings.

The additive, when pumped into the additive bore, needs to be pumped at a pressure sufficient to deliver and discharge the additive into the more viscous substances. If this pressure is substantial, a positive displacement pump, or a similar pump, may be used. Examples of suitable pumps are obtainable from manufacturers such as Brann & Leubbe and Luwa.

The annular constriction 62 is not necessary in all applications but is preferred since, in applications where the difference in viscosities of the major fluid substance and additive is large, compression assists in improving the homogeneity. Thus, compression is advantageous when the viscosity ratio of major fluid substance to additive is in excess of 100000:1; particularly when in excess of 250000:1.

Another embodiment of a distribution unit is illustrated in figure 5. The unit 90 is formed of a circular plate 90 which has a recess 92 extending inwardly from its upstream face along its axis to a position mid-way through it. A plurality of diverging bores 94 extend from the downstream end of the recess 92, at an angle with respect to a central axis of the plate 90, to the downstream face 96 of the plate 90. The diverging bores 94 are spaced evenly about the axis of the plate 90. A radial bore 100 extends radially inwardly from the outer circumferential edge 102 of the plate 90 to the join of the recess 92 and a diverging bore 94. In this way, a radial bore 100 is associated with each diverging bore 94. A valve member 104 is positioned in each radial bore 100 and is movable inwardly to seal off the entrance to the diverging bore 94 with which the radial bore 100 is associated. In this way, substance entering the unit 90 through the recess 92 is split up into several streams which leave the unit 90 through the diverging bores 94. Any one of the streams may be closed off by closing the associated valve member 104. A segmentation plate 40 is connected over the outlet of each diverging bore 94. To facilitate this, threaded apertures 106 are provided around the outlet of each diverging bore 94 for receiving suitable bolts.

The die assembly 10 may also be connected to free standing die assemblies such as described in U.S. Patent 5120554 instead of being directly connected to the extruder. Alternatively, the die plates 70 and the cutter 72 of the die assembly 10 may be dispensed with and the downstream tubes 44 connected directly to a free standing die assemblies such as described in U.S. Patent 5120554. In this case, the manifold and piping arrangements of the free standing die assemblies described in U.S. Patent 5120554 may be dispensed with. The die assembly 10 may also be connected to assemblies such as described in US patent 5238385.

### EXAMPLE

The following Example is presented for illustrative purposes only.

### Example

Dry ground corn and wheat, animal meat meal, minerals, vitamins, fat and salt are combined in amounts conventionally employed to prepare a dry extrusion-cooked pet food. As conventional, the ingredients are ground and then treated with steam and water to heat and moisten the mix. The treated mix has a temperature of about 90°C and a moisture content of about 23%.

The treated mixture is introduced into a co-rotating twin-screw extruder heated to provide temperatures of up to 120°C. A pressure of about 50 bar is generated in the extruder as the mix is kneaded and moves downstream in the extruder.

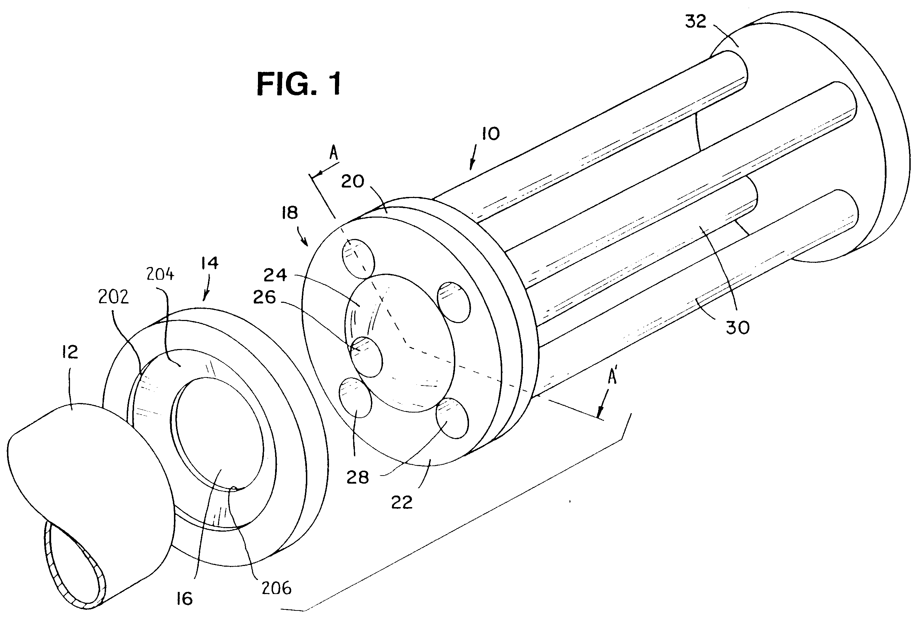

A die assembly 10 as illustrated in figures 1 to 3 is connected to the discharge end of the extruder. The extruded material is partitioned into four separate streams. A solution of a FD&C red colourant having a solids concentration of about 2% by weight is heated to about 90°C and then pumped under pressure into one segmentation plate 40. Tallow is heated to about 55°C and then pumped under pressure into a second segmentation plate 40. Carbon-dioxide is pumped under pressure into a third segmentation plate 40. A solution containing an FD&C yellow colourant and a chicken flavourant is fed under pressure into a fourth segmentation plate 40.

The combined flow in each downstream tube 42 is compressed and then expanded. The expanded material is then passed through a static mixer. The mixed combined flow is passed through dies having differing shapes, and the extruded product from each die is cut to differing lengths by separately operated cutters. The cut products are dried to a moisture content which provides for a product which is microbiologically stable.

In addition to having different shapes and dimensions, the products also have differences in colour, density and texture. The additives are uniformly distributed throughout the products indicating that tunnelling of the additive was minimal.

The circular plates and tubes illustrated in the drawings need not be circular in cross-section; square and polygonal cross-sections are permissible.

## Claims

1. A process for mixing an additive of viscosity of up to 1000 cP into a flowable foodstuff having a viscosity of 100000 cP to 750000 cP, the process comprising:
segmenting a flow of the foodstuff into a plurality of foodstuff streams travelling substantially in parallel in close proximity;
introducing the additive into the flow of the foodstuff at one or more points between the foodstuff streams to obtain a combined flow of foodstuff streams and additive; and
mixing the combined flow.

2. A process according to claim 1 further comprising compressing the combined flow prior to mixing.

3. A process according to claim 1 or claim 2 further comprising, prior to segmenting the foodstuff, partitioning the foodstuff into a plurality of partitioned flows and segmenting at least one of the partitioned flows.

4. A process according to any one of claims 1 to 3 in which the additive is introduced substantially centrally between the foodstuff streams.

5. A process according to any one of claims 1 to 4 in which the foodstuff is an extrusion cooked foodstuff.

6. A process according to any one of claims 2 to 5 in which the combined flow is expanded after compression but prior to mixing.

7. An apparatus for mixing an additive of viscosity of up to 1000 cP into a flowable foodstuff having a viscosity of 100000 cP to 750000 cP, the apparatus including a mixing assembly comprising:
segmenting means to segment a flow of the foodstuff into a plurality of foodstuff streams travelling substantially in parallel and in close proximity, the segmenting means comprising a plate (40) having two opposing faces and having a plurality of passages (80) through it, the openings of the passages (80) having a combined area of from 20% to 50% of the total area of the face which comes in contact with the foodstuff and additive; and
inlet means (54, 82) associated with the segmenting means to introduce the additive into the flow of the foodstuff at one or more points between the foodstuff streams to obtain a combined flow;
a compression means (62) to compress the combined flow; and
a mixer (242) to mix the compressed, combined flow.

8. An apparatus according to claim 7 in which each opening (80) has an area of up to about 5% of total area of the face which comes in contact with the foodstuff and additive.

9. An apparatus according to claim 7 or claim 8 in which the inlet means (54, 82) comprises a radial bore (54) formed within the plate and extending from the outer edge of the plate and terminating in an opening (82) which is substantially centrally disposed with respect to the face of the plate (40).

10. An apparatus according to any one of claims 7 to 9 comprising a plurality of mixing assemblies each connected to a common distribution means (18) for distributing the foodstuff equally between the mixing assemblies.

11. An apparatus according to any one of claims 7 to 10 further comprising a die plate (70) connected to the mixing assembly for the production of shaped products.

## Patentansprüche

1. Verfahren zur Einmischung eines Zusatzes einer Viskosität von bis zu 1000 cP in ein fließfähiges Nahrungsmittel mit einer Viskosität von 100000 cP bis 750000 cP, wobei das Verfahren umfassen:
Zerlegen des Förderstroms des Nahrungsmittels in eine Vielzahl von Nahrungsmittelströmen, die sich eng benachbart im wesentlichen parallel bewegen;
Einführen des Zusatzes in den Forderstrom des Nahrungsmittels an einem oder mehreren Punkten zwischen den Nahrungsmittelströmen, um einen kombinierten Förderstrom aus Nahrungsmittelströmen und Zusatz zu erhalten; und
Vermischen des kombinierten Förderstroms.

2. Verfahren nach Anspruch 1, das außerdem das Verdichten des kombinierten Förderstroms vor dem Vermischen umfaßt.

3. Verfahren nach Anspruch 1 oder Anspruch 2, das außerdem, vor dem Zerlegen des Nahrungsmittels, das Aufteilen des Nahrungsmittels in eine Vielzahl von Teil-Förderströmen sowie das Zerlegen von wenigstens einem der Teil-Förderströme umfaßt.

4. Verfahren nach irgendeinem der Ansprüche 1 bis 3, bei dem der Zusatz im wesentlichen zentral zwischen die Nahrungsmittelströme eingeführt wird.

5. Verfahren nach irgendeinem der Ansprüche 1 bis 4, bei dem das Nahrungsmittel ein kochextrudiertes Nahrungsmittel ist.

6. Verfahren nach irgendeinem der Ansprüche 2 bis 5, bei dem der kombinierte Förderstrom nach dem Verdichten, jedoch vor dem Vermischen, expandiert wird.

7. Vorrichtung zum Einmischen eines Zusatzes einer Viskosität von bis zu 1000 cP in ein fließfähiges Nahrungsmittel mit einer Viskosität von 100000 cP bis 750000 cP, wobei die Vorrichtung eine Mischanordnung aufweist, die umfaßt:
eine Zerlegeinrichtung zum Zerlegen eines Forderstroms des Nahrungsmittels in eine Vielzahl von Nahrungsmittelströmen, die sich im wesentlichen parallel und eng benachbart zueinander bewegen, wobei die Zerlegeinrichtung eine Platte (40) aufweist, die zwei gegenüberliegende Seiten aufweist und eine Vielzahl von Durchgangsöffnungen (80) aufweist, wobei die Öffnungen der Durchgangsöffnungen (80) zusammen eine Fläche von 20 % bis 50 % der Gesamtfläche derjenigen Seite aufweisen, die mit dem Nahrungsmittel und dem Zusatz in Kontakt kommt; und
eine Einlaßeinrichtung (54, 82), die der Zerlegeinrichtung zugeordnet ist, um den Zusatz in den Förderstrom des Nahrungsmittels an einem oder mehreren Punkten zwischen den Nahrungsmittelströmen einzuführen, um einen kombinierten Förderstrom zu erhalten;
eine Verdichtungseinrichtung (62), um den kombinierten Förderstrom zu verdichten; und
einen Mischer (242), um den verdichteten kombinierten Förderstrom zu vermischen.

8. Vorrichtung nach Anspruch 7, bei der jede Öffnung (80) eine Fläche von bis zu etwa 5 % der Gesamtfläche der Seite aufweist, die mit dem Nahrungsmittel und dem Zusatz in Kontakt kommt.

9. Vorrichtung nach Anspruch 7 oder Anspruch 8, bei der die Einlaßeinrichtung (54, 82) eine radiale Bohrung (54) aufweist, die innerhalb der Platte ausgebildet ist und sich von der Außenkante der Platte weg erstreckt und in einer Öffnung (82) endet, die bezüglich der Seite der Platte (40) im wesentlichen zentral angeordnet ist.

10. Vorrichtung nach irgendeinem der Ansprüche 7 bis 9, mit einer Vielzahl von Mischanordnungen, die jeweils mit einer gemeinsamen Verteilereinrichtung (18) zur gleichmäßigen Verteilung des Nahrungsmittels auf die Mischanordnungen verbunden sind.

11. Vorrichtung nach irgendeinem der Ansprüche 7 bis 10, die außerdem eine Formplatte (70) aufweist, die mit der Mischanordnung verbunden ist, um geformte Produkte herzustellen.

## Revendications

1. Procédé de mélange d'un additif ayant une viscosité pouvant atteindre 1 000 cP à un aliment susceptible de s'écouler et ayant une viscosité de 100 000 cP à 750 000 cP, le procédé comprenant :
la subdivision d'un flux de l'aliment en plusieurs filets d'aliment se déplaçant sensiblement en parallèle et en proximité étroite ;
l'introduction de l'additif dans le flux de l'aliment en un point ou plusieurs points entre les filets d'aliment pour obtenir un flux combiné de filets d'aliment et d'additif ; et
le mélange du flux combiné.

2. Procédé selon la revendication 1, comprenant par ailleurs la compression du flux combiné avant le mélange.

3. Procédé selon la revendication 1 ou la revendication 2, comprenant par ailleurs, avant la subdivision de l'aliment, la séparation de l'aliment en plusieurs flux séparés et la subdivision d'au moins l'un des flux sépares.

4. Procédé selon l'une quelconque des revendications 1 à 3, suivant lequel l'additif est introduit sensiblement au centre entre les filets d'aliment.

5. Procédé selon l'une quelconque des revendications 1 à 4, suivant lequel l'aliment est un aliment cuit et extrudé.

6. Procédé selon l'une quelconque des revendications 2 à 5, suivant lequel le flux combiné est expansé après compression, mais avant le mélange.

7. Appareil de mélange d'un additif de viscosité pouvant atteindre 1 000 cP à un aliment susceptible de s'écouler et ayant une viscosité de 100 000 cP à 750 000 cP, l'appareil comprenant un ensemble mélangeur comportant :
un moyen de subdivision pour subdiviser un flux de l'aliment en plusieurs filets d'aliment se déplaçant sensiblement en parallèle et en proximité étroite, le moyen de subdivision comprenant une plaque (40) ayant deux surfaces opposées et comportant plusieurs passages (80) qui la traversent, les orifices des passages (80) ayant une superficie combinée de 20% à 50% de la superficie totale de la surface qui entre en contact avec l'aliment et l'additif ; et
un moyen d'entrée (54, 82) associé au moyen de subdivision pour introduire l'additif dans le flux de l'aliment en un ou plusieurs points situés entre les filets d'aliment afin d'obtenir un flux combiné ;
un moyen de compression (62) pour comprimer le flux combiné ; et
un mélangeur (242) pour mélanger le flux combiné et comprimé.

8. Appareil selon la revendication 7, dans lequel chaque orifice (80) a une superficie pouvant atteindre 5% de la superficie totale de la surface qui entre en contact avec l'aliment et l'additif.

9. Appareil selon la revendication 7 ou la revendication 8, dans lequel le moyen d'entrée (54, 82) comprend un trou radial (54) réalisé dans la plaque et partant du bord extérieur de la plaque pour déboucher dans un orifice (82) qui est disposé sensiblement au centre de la surface de la plaque (40).

10. Appareil selon l'une quelconque des revendications 7 à 9, comprenant plusieurs ensembles mélangeurs dont chacun est raccordé à un moyen commun de distribution (18) pour distribuer l'aliment régulièrement entre les ensembles mélangeurs.

11. Appareil selon l'une quelconque des revendications 7 à 10, comprenant par ailleurs un plaque de filières (70) raccordée à l'ensemble mélangeur pour la production de produits mis en forme.
